# EUROPEAN PATENT SPECIFICATION

(11) **EP 1 092 004 B1**
(45) Date of publication and mention of the grant of the patent: **13.08.2008**
(21) Application number: 99943499.6
(22) Date of filing: 15.06.1999
(51) Int. Cl.: C10F 7/00, E04B 1/74, C04B 18/02

(54) **METHOD OF MANUFACTURING BUILDING MATERIAL, SUCH AS AN INSULATING MATERIAL, FROM PEAT PREFERABLY TAKEN DIRECTLY FROM AN EXISTING BOG**
VERFAHREN ZUR HERSTELLUNG VON BAUMATERIAL, WIE ZUM BEISPIEL ISOLIERMATERIAL, AUS VORZUGSWEISE DIREKT GEWONNENEM TORF
PROCEDE DE FABRICATION D'UN MATERIAU DE CONSTRUCTION, TEL QU'UN MATERIAU ISOLANT, A PARTIR DE TOURBE PRELEVEE DE PREFERENCE DIRECTEMENT DANS UNE TOURBIERE EXISTANTE

(30) Priority: 17.06.1998 NO 982780
(43) Date of publication of application: 18.04.2001
(73) Proprietor: Bioenergi Nord AS, 8401 Sortland (NO)
(72) Inventor: KLAUSEN, Roald, N-8400 Sortland (NO)
(74) Representative: TBK-Patent
(86) International application number: PCT/NO1999/000194
(87) International publication number: WO 1999/066007

(56) References cited:
- WO-A1-88/02425
- FI-B- 94 621
- NO-B- 177 681
- NO-C- 72 854
- DATABASE WPI Week 7014, Derwent Publications Ltd., London, GB; AN 1970-22728R, XP002921058 & SU 244 171 A (ORGTEKHSTROI LATVIAN MINI) 1970
- DATABASE WPI Week 9647, Derwent Publications Ltd., London, GB; AN 1996-475259, XP002921059 & RU 2 055 056 C1 (KASSANDRA ETERP) 27 February 1996
- DATABASE WPI Week 7525, Derwent Publications Ltd., London, GB; AN 1975-42326W, XP002921060 & SU 455 076 A (LATV AGRIC ACAD) 15 January 1975
- DATABASE WPI Week 9807, Derwent Publications Ltd., London, GB; AN 1998-075451, XP002921061 & RU 2 081 080 C1 (GAMAYUNOV S.N.) 10 June 1997

## Description

The invention relates to a method of manufacturing a building material such as an insulating material, from peat preferably taken directly from a bog occurence.

Peat is a type of soil consisting partly of transformed plant residues, and is found in wet areas such as bogs. Almost all peat is formed in acid conditions under water. The transformation itself of organic material into peat happens very slowly. The properties of the peat will to a great degree be determined by the plants which used to grow at the place. Usually peat is found in the tempered zone on the Northern hemisphere. Best known is the use of peat for roofing, or as a fuel after the peat is dried.

Peat provides a light, porous material when its moisture has been removed. Of course, dry peat will have properties which basically makes it suitable for many purposes, as building material among other things. As far as the applicant knows, known trials of producing fibre boards and building insulation from peat have not proved particularly successful. One reason is probably that it has not been possible to prevent such building materials of peat from absorbing moisture from the surroundings later.

NO-B-177681 discloses a method of producing a construction material based on peat or other organic, fibre-rich materials. The organic fibres are mixed together with a binder simultaneously using a heat treatment. Prior to the use, the binder is foamed with a gas, whereby the final construction material is provided with a desired amount of enclosed gas, thus improving the isolating properties of the final product.

In SU244171 the use of a wax-type substance for impregnating molded peat plates is described.

RU2055056 discloses a lightweight filler material comprising formed peat granules, wherein no impregnation of the peat granules and/or gluing of the peat granules is described.

The main object of the present invention is to provide an adequate building material from peat. This is realized by the present method of manufacturing building material such as an insulating material from peat defined according to claim 1. Further specific embodiments of the invention are defined in dependent claims 2 to 6. Other advantageous details of the invention appear from the following part of the specification.

One of the advantages of the invention is that the peat is first converted into peat pellets/peat balls, so that the building material, consisting of peat pellets/peat balls glued together, is only connected at points of contact between adjacent peat pellets/peat balls. Thereby the building material achieves increased porosity, becomes lighter and achieves a greater ability to resist the movements normally occurring in the construction in which the building material is incorporated. Another and not less important advantage is that the peat pellets/peat balls are impregnated. This results in the building material not absorbing moisture from the surroundings later. Moreover, the quality of the impregnation will be a lot higher because of its taking place before the building material receives its final form and size in the gluing together. By selecting a convenient impregnation the building material may be provided with properties making the building material fire retarding, tight to diffusion, water-repellent, fungicidal etc.

In the following part of the specification it will be explained briefly how the building material in question is manufactured. Preferably the peat is taken directly from the bog occurence. It will not be explained in any further detail how this is done, since it is not part of the present invention. The present method starts by the peat first being converted into peat pellets/peat balls. This is done the most conveniently by the peat first being extruded to a peat string which preferably has a circular cross-section of a diameter of 2-10 mm. The peat string is then cut into peat cubes of lengths of 2-10 mm, whereafter the peat cubes are reshaped into peat pellets/peat balls by being passed through a rotating pipe. The pipe may for example have double rotation. The next thing to happen is that the converted peat pellets/peat balls are dehydrated until the remaining moisture is maximum 12 %, preferably 10-12 %. The dehydrating itself may be carried through in any suitable manner, such as by mechanical air-drying by ordinary air and by heated air. It is also possible to dehydrate the peat pellets/peat balls during the above rotation in pipes by supply of heated air. To prevent the building material from absorbing moisture from the surroundings later, the dehydrated peat pellets/peat balls are impregnated by for example a wax emulsion of an suitable type. After application of the wax emulsion, the peat pellets/peat balls are dried in a micro wave oven for example. It all ends by impregnated and dried peat pellets/peat balls being glued together with an adhesive mixture suitable therefore, so that a building material of desired shape and thickness may be formed. In addition the impregnation may be such that the building material is fire retarding, tight to diffusion, water repellent, fungicidal, etc.

In this manner is provided an adequate building material which is meant, first and foremost, to be used as an insulating material. The building material may be used with advantage in co-operation with other building materials, such as wood and steel, to form carrying sandwich constructions such as wall and deck elements. In the production of sandwich construction peat pellets are glued together with the other comprised materials. The building material may also be used for the formation of wall and ceiling boards.

## Claims

1. A method of producing a building material, such as an insulating material, from peat, preferably peat taken directly from a bog occurrence, said method comprising the successive steps of (a) converting a peat mass into peat balls; (b) dehydrating the peat balls until the remaining moisture is maximum 12%, preferably 10-12%; (c) impregnating the dehydrated peat balls with at least a water-repelling substance; and (d) drying the impregnated peat balls, wherein said method further comprises a final step (e) of gluing the impregnated and dried peat balls together to form a building material of desired shape and thickness, said building material thus consisting of peat balls that, by virtue of their ball-shape only are connected at contact points between adjacent peat balls, the resulting material construction providing a porous, lightweight and strong building material which is at least hydrophobic.

2. A method according to claim 1, wherein said method further comprises, in step (a), converting said peat mass into a peat string; cutting said peat string into peat units; and passing said peat units through a rotating pipe, the passing and rotation of peat units within the pipe reshaping the peat units into peat balls.

3. A method according to claim 1 or 2, wherein said peat mass is extruded into a peat string.

4. A method according to claim 3, wherein said peat string is extruded with a circular cross-section with a transverse dimension in the range of 2-10 millimetres.

5. A method according to claim 4, wherein said peat string is cut into peat units of a length equal to the transverse dimension of the peat string.

6. A method according to one of the preceding claims 1-5, wherein said method comprises, in step (a), passing the peat units through a rotating pipe of double rotation, thus facilitating the forming of ball-shaped peat units within the pipe.

## Patentansprüche

1. Verfahren zur Herstellung eines Baumaterials, wie etwa ein isolierendes Material, aus Torf, vorzugsweise direkt aus einem Moorvorkommen entnommenem Torf, wobei das Verfahren die aufeinanderfolgenden Schritte umfasst (a) Konvertieren einer Torfmasse in Torfbälle; (b) Entwässerung der Torfbälle bis der restliche Feuchtegehalt maximal 12% ist, vorzugsweise 10-12%; (c) Imprägnieren der entwässerten Torfbälle mit mindestens einer wasserabweisenden Substanz; und (d) Trocknen der imprägnierten Torfbälle, wobei das Verfahren ferner umfasst einen finalen Schritt (e) des Zusammenklebens der imprägnierten und getrockneten Torfbälle um ein Baumaterial von gewünschter Form und Dicke zu bilden, so dass das Baumaterial aus Torfbällen bestehet, die aufgrund ihrer Ballform nur an Berührungspunkten zwischen benachbarten Torfbällen verbunden sind, die resultierende Materialkonstruktion stellt ein poröses, leichtgewichtiges und stabiles Baumaterial bereit, welches mindestens hydrophob ist.

2. Verfahren nach Anspruch 1, wobei das Verfahren ferner umfasst, in Schritt (a), Konvertieren der Torfmasse in einen Torfstrang; Schneiden des Torfstrangs in Torfeinheiten; und Durchlaufen der Torfeinheiten durch ein rotierendes Rohr, wobei das Durchlaufen und Rotieren von Torfeinheiten in dem Rohr die Torfeinheiten in Torfbälle umformt.

3. Verfahren nach Anspruch 1 oder 2, wobei die Torfmasse in einen Torfstrang extrudiert wird.

4. Verfahren nach Anspruch 3, wobei der Torfstrang extrudiert wird mit einem kreisförmigen Querschnitt mit einer Querausdehnung in dem Bereich von 2-10 Millimeter.

5. Verfahren nach Anspruch 4, wobei der Torfstrang in Torfeinheiten von einer Läge gleich der Querausdehnung des Torfstrangs geschnitten wird.

6. Verfahren nach einem der vorhergehenden Ansprüche 1-5, wobei das Verfahren umfasst, in Schritt (a), Durchlaufen der Torfeinheiten durch ein rotierendes Rohr von zweiachsiger Rotation, womit die Bildung von ballförmigen Torfeinheiten in dem Rohr unterstützt wird.

## Revendications

1. Procédé de fabrication d'un matériau de construction, tel qu'un matériau isolant, à partir de tourbe, de préférence de la tourbe prélevée directement dans une tourbière accessible en surface, ledit procédé comprenant les étapes successives consistant à : (a) convertir une masse de tourbe en boulettes de tourbe ; (b) déshydrater les boulettes de tourbe jusqu'à ce que l'humidité restante soit égale au maximum à 12%, de préférence comprise entre 10 et 12% ; (c) imprégner les boulettes de tourbe déshydratées avec au moins une substance hydrofuge ; et (d) sécher les boulettes de tourbe imprégnées, dans lequel ledit procédé comprend en outre une étape finale (e) consistant à coller ensemble les boulettes de tourbe imprégnées et séchées de manière à former un matériau de construction qui présente une forme et une épaisseur désirées, ledit matériau de construction se composant ainsi de boulettes de tourbe qui, du fait de leur forme de boulette, sont seulement reliées au niveau des points de contact entre les boulettes de tourbe adjacentes, la construction de matériau qui en résulte fournissant un matériau de construction poreux, léger et résistant qui est au moins hydrophobe.

2. Procédé selon la revendication 1, dans lequel ledit procédé comprend en outre, dans l'étape (a), la conversion de ladite masse de tourbe en un cordon de tourbe ; la coupe dudit cordon de tourbe en tronçons de tourbe ; et le passage desdits tronçons de tourbe à travers un tuyau tournant, le passage et la rotation des tronçons de tourbe à l'intérieur du tuyau transformant les tronçons de tourbe en forme de boulettes de tourbe.

3. Procédé selon la revendication 1 ou la revendication 2, dans lequel ladite masse de tourbe est extrudée selon un cordon de tourbe.

4. Procédé selon la revendication 3, dans lequel ledit cordon de tourbe est extrudé selon une section transversale circulaire qui présente une dimension transversale se situant dans la plage comprise entre 2 et 10 millimètres.

5. Procédé selon la revendication 4, dans lequel ledit cordon de tourbe est coupé en tronçons de tourbe dont la longueur est égale à la dimension transversale de la lanière de tourbe.

6. Procédé selon l'une quelconque des revendications précédentes 1 à 5, dans lequel ledit procédé comprend, dans l'étape (a), le passage des tronçons de tourbe à travers un tuyau tournant soumis à une double rotation, facilitant ainsi la formation des tronçons de tourbe en forme de boulettes à l'intérieur du tuyau.
